Europäisches Patentamt

(19) European Patent Office

Office européen des brevets

(11) Publication number: **0 116 960**
**B1**

(12) **EUROPEAN PATENT SPECIFICATION**

(45) Date of publication of patent specification: **16.09.87**

(21) Application number: **84101611.6**

(22) Date of filing: **17.02.84**

(51) Int. Cl.⁴: **H 01 M 10/39,** H 01 M 10/42

(54) **Sodium-sulphur batteries and power storage devices.**

(30) Priority: **18.02.83 JP 24611/83**

(43) Date of publication of application:
**29.08.84 Bulletin 84/35**

(45) Publication of the grant of the patent:
**16.09.87 Bulletin 87/38**

(84) Designated Contracting States:
**DE FR GB**

(56) References cited:
**EP-A-0 051 112**
**FR-A-1 560 882**
**FR-A-2 309 052**
**GB-A-1 495 706**
**GB-A-1 530 273**
**US-A-3 953 227**

**PATENTS ABSTRACTS OF JAPAN, vol. 7, no.
251 (E-209)1396r, 8th November 1983 & JP - A -
58137974**

**PATENTS ABSTRACTS OF JAPAN, vol. 5, no.
141 (E-73)813r, 5th September 1981 & JP -A-
5678063**

(73) Proprietor: **HITACHI, LTD.**
**6, Kanda Surugadai 4-chome Chiyoda-ku
Tokyo 100 (JP)**

(72) Inventor: **Gotou, Tadashi**
**17-24, Ishinazakacho-1-chome
Hitachi-shi (JP)**
Inventor: **Kawamura, Fumio**
**14-D401, Higashitagacho-3-chome
Hitachi-shi (JP)**
Inventor: **Sagawa, Norihiko**
**1415-55, Ishinazakacho
Hitachi-shi (JP)**
Inventor: **Yusa, Hideo**
**622-7, Kamitsubo
Ichige Katsuta-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

## Description

This invention relates to sodium-sulphur batteries and electrical power storage devices of high capacity embodying these sodium-sulphur batteries.

Sodium-sulphur batteries have been studied and developed in many countries since the principle of the sodium-sulphur battery was disclosed in 1969 [Denki Gakkai Gijutsu Hokoku (Part II) No. 103, 29—36 (October 1980)].

The basic structure of a sodium-sulphur battery comprises molten sodium as an active material for the minus pole, a molten sulphur as an active material for the plus pole, and a sodium ion-permeable solid electrolyte. The solid electrolyte is a glass or a ceramic material, and particularly β-alumina ($Na_2O \cdot 11\ Al_2O_3$) is used as the electrolyte in most of the batteries now under development owing to its high sodium ion permeability. Furthermore, β-alumina also acts as a separator between the plus pole and the minus pole because it has no electron conductivity.

Sulphur also has no electron conductivity, and thus is impregnated in an electroconductive material to transfer electrons accompanying the electrochemical reactions. The effective working temperature of the battery is 300 to 350°C in view of the melting point of the active material for the plus pole.

One example of the typical structure of the sodium-sulphur battery is disclosed in JP—A—57-18670.

FR—A—1 560 882 describes a sodium-sulphur cell wherein the compartments for sulphur and sodium are separated by a sodium ion permeable solid electrolyte, e.g. alumina, and which is provided with a sodium storage tank connected via a line to the sodium compartment. Further, a return line may be provided between the sodium compartment and the sodium storage tank.

FR—A—2 309 052 relates to a sodium-sulphur cell of the same type provided with a sodium tank which may be drained through a pipe.

The discharging and charging reactions of the sodium-sulphur battery can be given in the following equations:

At the minus pole:

$$2Na \underset{charge}{\overset{discharge}{\rightleftharpoons}} 2Na^+ + 2e$$

At the plus pole:

$$S + 2e \underset{charge}{\overset{discharge}{\rightleftharpoons}} S^{--}$$

overall process:

$$2Na + S \underset{charge}{\overset{discharge}{\rightleftharpoons}} Na_2S$$

The sodium-sulphur battery has the following characteristics owing to the electrolyte being a solid and the active materials for both poles being molten liquids:

1) No side reaction occurs at both charging and discharging, resulting in no self-discharge, and the charging quantity of electricity can be equal to the discharging quantity of electricity.

2) The battery is completely sealed, resulting in no maintenance requirement.

3) the active materials are liquids, resulting in no life limit to the battery.

4) The capacity reduction is much less at high rate discharging.

However, the conventional sodium-sulphur batteries have the following disadvantages:

1) When the solid electrolyte is damaged owing to a mechanical or thermal shock, etc., or gets cracks through attack by potassium present as an inpurity in the sodium, there is the danger of a rapid reaction between sodium and sulphur, and there are no countermeasures against that danger.

2) Molten sulphur has a high reactivity and is also used at a high temperature, and may corrode metallic vessels.

3) The battery characteristics are deteriorated due to a decrease in the plurality of molten sodium and sulphur, resulting in shortened battery life.

It is an object of the present invention to provide a sodium-sulphur battery having a structure which prevents an undesired reaction between the electrochemically active materials in cases of accidental contact. Simultaneously, the life of the battery shall be improved, and a decrease in the purity of the electrochemically active materials and corrosion of structural materials shall be prevented. Furthermore, an electrical power storage device using such batteries is to be provided.

This object is achieved according to claims 1 and 15. The dependent claims refer to preferred embodiments.

The sodium-sulphur battery according to the invention comprises

a molten sodium chamber containing molten sodium as an active material for the minus pole,

at least one molten sulphur chamber containing molten sulphur as an active material for the plus pole and consisting of a sodium ion permeable solid electrolyte,

a sodium storage tank communicating with the molten sodium chamber, and

draining means for withdrawing the molten sodium from the molten sodium chamber to the sodium storage tank,

and is characterized in that

the draining means comprise a piping connecting the molten sodium chamber to the sodium storage tank, a drain valve provided in that piping, and means for detecting an abnormal electric discharge of the battery and controlling the drain valve.

The electrical power storage device according to the invention is based on the above-defined sodium-sulphur batteries wherein

—a plurality of modules connected in parallel to one another and consisting of a plurality of sodium-sulphur batteries comprising a common molten sodium chamber is provided,

—a plurality of the modules is connected in series to one another, thereby forming storing battery strings,

—a plurality of the battery strings is connected in parallel to one another, thereby forming units,

—the strings are connected to a power line through individual breakers, a common direct current reactor, and a common converter,

—the common molten sodium chambers of the individual modules in equal potential level rows are connected to a common sodium tank through a sodium circulating mechanism, and

—draining mechanisms, each comprising a piping connecting the common molten sodium chamber to the sodium storage tank, a drain valve provided in the piping, and means for detecting an abnormal electric discharge of the battery and controlling the drain valve provided.

According to the inventive conception the molten sodium can be drained rapidly to prevent an accident due to the reaction between molten sodium and sulphur.

The sulphur as an active material for the plus pole is sealed in a capsule of β-alumina, and the capsule is placed in a cell containing molten sodium. The molten sodium circulates around the lower part of the capsule. With this structure, an accident due to reaction between the active materials can be more safely prevented, and the life of the battery can be much more prolonged by sealing the sulphur liable to corrode metallic structural materials in the capsule of β-alumina. The capsule for the molten sulphur may be detachably inserted in the molten sodium chamber.

According to a preferred embodiment of the invention, the sodium-sulphur battery having the above structure further comprises a sodium circulating mechanism for purifying and returning the sodium from the sodium storage tank to the molten sodium chamber.

In the following, the invention will be explained with reference to the drawings.

Figs. 1 to 3 are schematic views of the structure of sodium-sulphur batteries according to three embodiments of the present invention, and

Fig. 4 is a schematic view of an electrical power storage device embodying sodium-sulphur batteries according to the invention.

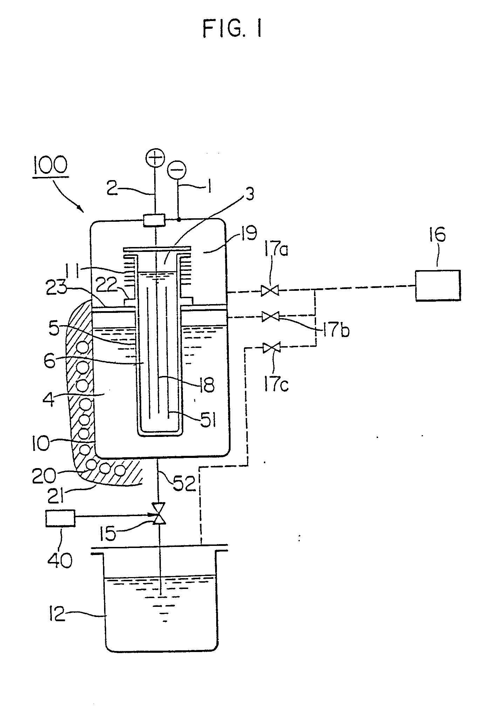

Fig. 1 shows a sodium-sulphur battery *100* representing a first embodiment of the present invention.

The sodium-sulphur battery comprises a cylindrical, sealed molten sodium chamber *10* which is electrically connected to the minus pole *1*. The molten sodium chamber *10* is separated into an upper compartment and a lower compartment by a separating plate *23*, and molten sodium *4* is placed in the lower compartment as an active material for the minus pole *1*. A capsule of β-alumina serving as solid electrolyte *5* defining the molten sulphur chamber *3* is provided through the upper compartment and the lower compartment. In the capsule, a hollow cylinder *51* and the plus electrode *18* are provided to form an annular passage, through which molten sulphur can circulate by convection. Furthermore, molten sulphur *6* as an active material for the plus pole *2* is impregnated in an electroconductive material, such as carbon felt, and filled in the capsule to cover the entire annular passage. At the outer periphery of the capsule in the upper compartment, cooling fins *11* are provided. The upper compartment provides a cooling chamber *19* for the capsule. Argon gas serving as a coolant is supplied from an argon gas source *16* to the cooling chamber *19* through a valve 17*a*.

At the bottom of the molten sodium chamber *10*, a drain piping *52* is provided and connected to the sodium storage tank *12* through a drain valve *15* to form a drain system. The drain system is all made of stainless steel. In the case of an accident due to reaction between sodium and sulphur, the sodium in the molten sodium chamber *10* is drained into the sodium storage tank *12*. Argon gas from the argon gas source *16* is supplied to the lower compartment of the molten sodium chamber *10* and the sodium storage tank *12* through valves *17b* and 17*c*, respectively, as protective gas.

The parts in contact with molten sodium, including the molten sodium chamber *10* and the sodium storage tank *12*, are provided with heating means including a heater *20* and a heat insulating wall *21*. In Fig. 1, the heating means are shown only partially at the molten sodium chamber *10*.

The capsule of β-alumina containing molten sulphur *6* is inserted into the molten sodium chamber *10* containing molten sodium *4* in the lower compartment without any special sealing mechanism. That is, a projecting flange *22* is provided around the capsule of the solid electrolyte *5* at a given level, and only fixed to the separating plate *23* of the molten sodium chamber *10*.

The battery is operated as follows:

The battery *100* is heated to a working temperature of 300 to 350°C by means of the heater *20*, and then the battery starts to work. As discharge begins, both active materials generate heat, and the heating by the heater *20* is discontinued. In this case, the working temperature can be maintained without heating. The molten sulphur in the capsule is cooled at the upper part and heated at the lower part and thus is subjected to natural convection, with the result that it circulates through the annular passage in the capsule, and the working temperature can thus be maintained.

The discharge reaction proceeds smoothly (electromotive force: 2,07 V), and as the discharge proceeds, sodium polysulfide having a high melting point and no electron conductivity is ultimately and locally formed, and the active material for the plus pole is solidified, resulting in an increase of the internal resistance and a drastic drop of the battery potential.

Charging is the reversal of discharging; the plus pole and the minus pole of a direct current source are connected to the plus pole and the minus pole of the battery, and then the battery is charged. As charging proceeds, free sulphur is formed, and the surfaces of β-alumina and the electroconductive material are covered by the free sulphur to form insulating layers. Then, the charging voltage is suddenly increased.

When a decrease of the electromotive force of the battery is found by repetitions of discharging and charging, the molten sodium 4 in the molten sodium chamber 10 is drained into the sodium storage tank 12 through the drain piping 52 and the drain valve 15, and then fresh sodium is supplied to the molten sodium chamber 10, or when the decrease of the electromotive force is caused by the capsule it is replaced with a fresh capsule.

An accident due to reaction between sodium and sulphur caused by cracking of the capsule during operation of the battery can be detected by monitoring an abnormal drop of the discharge potential. In such a case, the drain valve 15 is opened by a signal from a potential detector 40 detecting an abnormal discharge potential and all the molten sodium 4 is drained immediately from the molten sodium chamber 10 into the sodium storage tank 12. The, the cracked capsule is replaced with a fresh one, and sodium is supplied again to the molten sodium chamber 10 from the sodium storage tank 12 to reactivate the battery.

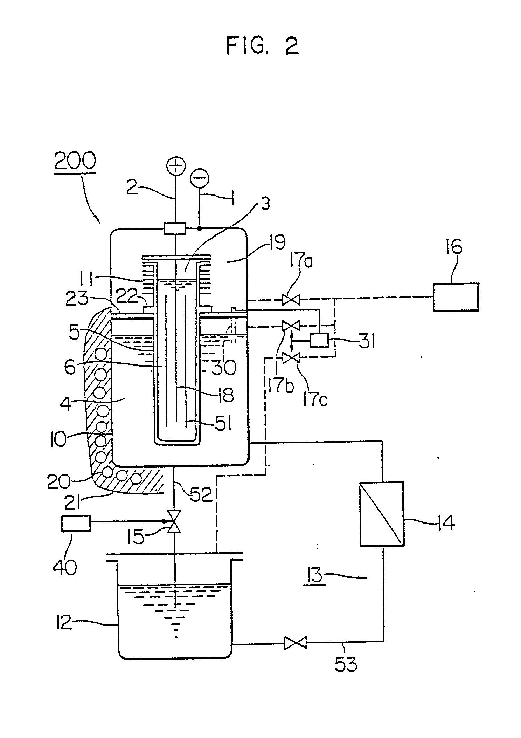

In Fig. 2 a sodium-sulphur battery 200 according to another embodiment of the present invention is schematically shown, where a sodium circulating mechanism 13 is added to the structure of the battery 100 shown in Fig. 1. Same parts as in Fig. 1 are indicated in Fig. 2 with the same reference numerals.

In Fig. 2, the sodium drained into the sodium storage tank 12 is returned to the molten sodium chamber 10 through a sodium purifier 14. The sodium circulating mechanism 13 comprises a piping 53 connecting the sodium storage tank 12 to the molten sodium chamber 10 through the sodium purifier 14, which purifies and circulates the sodium from the sodium storage tank 12 to the molten sodium chamber 10. The sodium circulating mechanism 13 is also all made of stainless steel.

The battery is operated as follows: At first, the entire battery is thoroughly preheated to about 200°C by means of the heater 20, and then molten sodium is supplied to the molten sodium chamber 10 from the sodium storage tank 12 through the sodium purifier 14. This supplying operation is carried out by pressure difference of the protective gas introduced into the head space of the molten sodium chamber 10 and the head space of the sodium storage tank 12 by controlling the valves 17b and 17c. That is, a valve control circuit 31 is actuated by a signal from a liquid level meter 30 provided at the upper part of the lower compartment of the molten sodium chamber 10 to close the valves 17b and 17c. With this valve operation, a predetermined amount of sodium is supplied into the molten sodium chamber 10. After the supply of the predetermined amount of sodium, the battery is heated to a working temperature of 300 to 350°C.

The subsequent operations are carried out in the same manner as explained above with regard to the battery of Fig. 1.

The sodium drained in to the sodium storage tank 12 is purified through the sodium purifier 14 and returned to the molten sodium chamber 10. The sodium purifier 14 is usually a cold trap, hot trap, or carbon adsorption type filter.

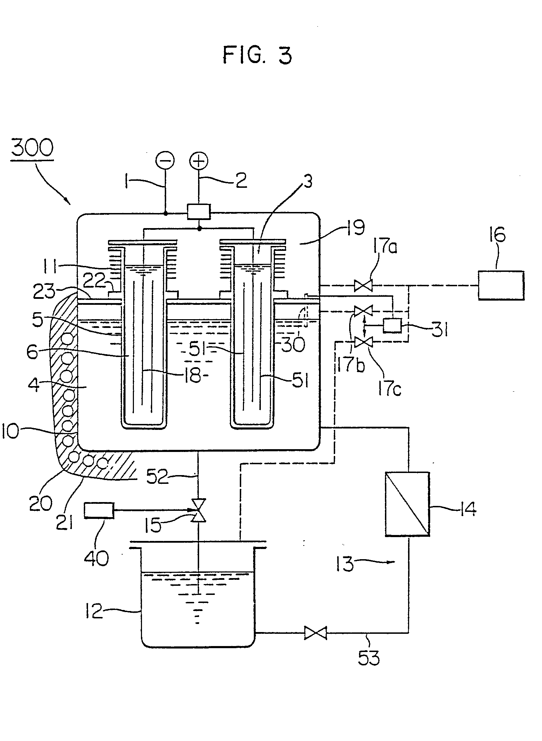

In Fig. 3, a battery 300 comprising a plurality of capsules (two in Fig. 3) immersed in common molten sodium according to another embodiment of the present invention is shown, whereby the same parts as in Figs. 1 and 2 are designated with the same reference numerals. With this structure, a compact battery with high capacity can be realized.

According to the embodiments of batteries shown in Figs. 1, 2 and 3, the sulphur as the active material for the plus pole is sealed in a capsule of β-alumina and can be simply inserted into the molten sodium chamber 10 without any contact with other material than β-alumina, with the result of improved corrosion resistance and improved gas tightness of the battery and prevention of deterioration of the sulphur. Furthermore, according to the embodiments shown in Figs. 2 and 3, the sodium can be purified and reused, which results in a better battery performance. All these effects also lead to a prolongation of the battery life. Furthermore, an accident due to a reaction between sodium and sulphur caused by damaged β-alumina capsule can be prevented by immediate draining of the sodium from the molten sodium chamber 10, whereby safety is considerably improved.

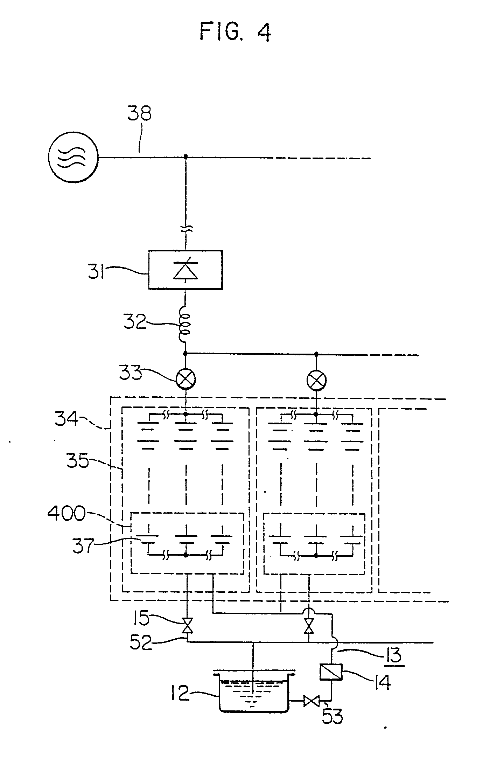

Fig. 4 shows an embodiment of combination of sodium-sulphur batteries according to the invention to an electrical power storage device. In modules 400, a plurality of sodium-sulphur batteries 37 each corresponding to the structure of the battery 300 of Fig. 3 are connected in parallel to one another. A plurality of modules 400 is further connected in series to one another, thereby forming battery strings 35. A plurality of the battery strings 35 is further connected in parallel to one another, thereby forming units 34. In this case, the sodium is common in each module 400. Individual breakers 33 are provided at the individual battery strings 35. The battery strings 35 are connected to a power line 38 through the breakers 33, a common direct current reactor 32 and a common converter 31. The direct current reactor 32 is a filter for flattening the wave form after rectification when the batteries are charged, and the converter 31 comprises a semiconductor such as thyristor, etc., a transformer for adjusting the voltage, etc., and converts AC into DC on charging and DC to Ac on discharging.

The common sodium as the active material for the negative pole in the batteries 37 in the individual modules 400 arranged in equal potential level rows can be drained into the common sodium storage tank 12 through drain pipings 52 and drain valves 15, and the sodium in the common sodium storage tank 12 can be returned to the individual modules 400 through the common sodium purifier 14.

By providing a power storage device according to the invention in a substation, charging and discharging can be repeated according to fluctuations in the distribution load, whereby an effect on flattening the power source load can be obtained. Thus, the load fluctuation in the power generating facility is reduced. By using the sodium circulating mechanism including the common sodium storage tanks and common sodium purifiers, the power storage device according to the invention becomes compact, and a high power storage capacity can be obtained in a very economical manner.

In the foregoing embodiments, the sodium circulation is carried out by a gas pressure difference, however, it can be also carried out by a sodium driving facility such as an electromagnetic pump, etc., provided in the circulating mechanism, whereby the sodium purification can be carried out during the operation of the battery.

According to the present invention, the sodium can be rapidly drained from the molten sodium chamber in case of an accident due to a reaction between sodium and sulphur, and sodium and sulphur can be instantly separated from each other. Thus, the safety of the battery is considerably increased.

**Claims**

1. A sodium-sulphur battery comprising
a molten sodium chamber (10) containing molten sodium (4) as an active material for the minus pole (1), .
at least one molten sulphur chamber (3) containing molten sulphur (6) as an active material for the plus pole (2) and consisting of a sodium ion permeable solid electrolyte (5),
a sodium storage tank (12) communicating with the molten sodium chamber (10), and
draining means for withdrawing the molten sodium from the molten sodium chamber (10) to the sodium storage tank (12), characterized in that
the draining means comprise a piping (52) connecting the molten sodium chamber (10) to the sodium storage tank (12), a drain valve (15) provided in the piping (52), and means (40) for detecting an abnormal electric discharge of the battery and controlling the drain valve (15).

2. A sodium-sulphur battery according to claim 1, characterized in that the means for detecting an abnormal electric discharge are a potential detector (40).

3. A sodium-sulphur battery according to claim 1 or 2, further characterized by a sodium circulating mechanism (13) for purifying and returning the sodium from the sodium storage tank (12) to the molten sodium chamber (10).

4. A sodium-sulphur battery according to one of claims 1 to 3, characterized in that the molten sulphur chamber (3) is a capsule made of the solid electrolyte (5) and is detachably inserted into the molten sodium chamber (10).

5. A sodium-sulphur battery according to one of claims 1 to 4, characterized in that the solid electrolyte (5) is β-alumina.

6. A sodium-sulphur battery according to one of claims 1 to 5, characterized in that a hollow cylinder (51) is provided around the plus electrode (18) within the molten sulphur chamber (3) to promote circulation of the molten sulphur by convection.

7. A sodium-sulphur battery according to one of claims 1 to 6, characterized in that the molten sulphur (6) is impregnated in an electronconductive material.

8. A sodium-sulphur battery according to claim 7, characterized in that the electroconductive material is carbon felt.

9. A sodium-sulfur battery according to one of claims 1 to 8, characterized in that a cooling chamber (19) surrounding the upper part of the molten sulphur chamber (3) is provided on the top end of the molten sodium chamber (10) and the outer surface of the molten sulphur chamber (3) is provided with cooling fins (11).

10. A sodium-sulphur battery according to one of claims 1 to 9, characterized in that inert gas pipings for introducing inert gas into the cooling chamber (19), the head space in the molten sodium chamber (10) and the head space in the sodium storage tank (12) are provided.

11. A sodium-sulphur battery according to claim 10, characterized in that valves (17b, 17c) are provided in the pipings connecting the inert gas source (16) to the head space of the molten sodium chamber (10) and to the sodium storage tank (12), respectively, for supplying molten sodium from the sodium storage tank (12) to the molten sodium chamber (10) by applying a pressure difference of the inert gas between the head space of the molten sodium chamber (10) and the head space of the sodium storage tank (12).

12. A sodium-sulphur battery according to one of claims 1 to 11, characterized in that the molten sodium chamber (10), the sodium storage tank (12) and the connecting pipings are surrounded by heating means (20, 21).

13. A sodium-sulphur battery according to one of claims 1 to 12, characterized in that a sodium purifier (14) is provided in the sodium circulating mechanism (13).

14. A sodium-sulphur battery according to claim 13, characterized in that the sodium purifier (14) is a cold trap, hot trap or adsorption type filter.

15. An electrical power storage device embodying sodium-sulphur batteries according to claim 1, wherein

—a plurality of modules (400) connected in parallel to one another and consisting of a plurality of sodium-sulphur batteries (37) comprising a common molten sodium chamber (10) is provided,

—a plurality of the modules (400) is connected in series to one another, thereby forming storing battery strings (35),

—a plurality of the battery strings (35) is connected in parallel to one another, thereby forming units (34),

—the strings are connected to a power line (38) through individual breakers (35), a common direct current reactor (32), and a common converter (31),

—the common molten sodium chambers (10) of the individual modules (400) in equal potential level rows are connected to a common sodium tank (12) through a sodium circulating mechanism (13), and

—draining mechanisms, each comprising a piping (52) connecting the common molten sodium chamber (10) to the sodium storage tank (12), a drain valve (15) provided in the piping (52), and means (40) for detecting an abnormal electric discharge of the battery and controlling the drain valve (15) are provided (fig. 1+4).

16. An electrical power storage system according to claim 15, characterized in that the molten sulphur chamber (3) is a capsule made of the solid electrolyte 5 and is detachably inserted into the common molten sodium chamber (10).

17. An electrical power storage system according to claim 15 or 16, characterized in that the solid electrolyte (5) is β-alumina.

18. An electrical power storage system according to one of claims 15 to 17, characterized in that a hollow cylinder (51) is provided around the plus electrode (18) in the molten sulphur chamber (3) to promote circulation of the molten sulphur by convection.

19. An electrical power storage system according to one of claims 15 to 18, characterized in that a sodium purifier (14) is provided in the sodium circulating mechanism (13).

**Patentansprüche**

1. Natrium-Schwefel-Batterie umfassend

eine geschmolzenes Natrium (4) als aktives Material für den Minuspol (1) enthaltende Kammer (10),

mindestens eine Kammer (3), welche geschmolzenen Schwefel (6) als aktives Material für den Pluspol (2) enthält und aus einem festen, für Natriumionen durchlässigen Elektrolyt (5) besteht,

einen Vorratsbehälter (12) für Natrium, welcher mit der Kammer (10) für geschmolzenes Natrium in Verbindung steht, sowie

einen Ablauf zum Entleeren des geschmolzenen Natriums aus der Kammer (10) in den Natrium-Vorratsbehälter (12), dadurch gekennzeichnet,

dass der Ablauf eine Rohrleitung (52) umfasst, die die Kammer (10) für geschmolzenes Natrium mit dem Natrium-Vorratsbehälter (12) verbindet sowie ein Entleerungsventil (15) in der Rohrleitung (52) und Mittel zum Feststellen einer aussergewöhnlichen elektrischen Entladung der Batterie und zum Steuern des Ablaufventils (15).

2. Natrium-Schwefel-Batterie nach Anspruch 1, dadurch gekennzeichnet, dass die Mittel zum Festellen einer aussergewöhnlichen elektrischen Entladung einen Spannungsdetektor darstellen.

3. Natrium-Schwefel-Batterie nach Anspruch 1 oder 2 gekennzeichnet durch einen Mechanismus (13) zum Umwälzen des Natriums, um das Natrium zu reinigen und aus dem Vorratstank (12) in die Kammer (10) für geschmolzenes Natrium zurückzuführen.

4. Natrium-Schwefel-Batterie nach einem der Ansprüche 1 bis 3, dadurch gekennzeichnet, dass die Kammer (3) für geschmolzenes Natrium eine aus dem festen Elektrolyt (5) hergestellte Kapsel ist, die in der Kammer (10) für geschmolzenes Natrium herausnehmbar angeordnet ist.

5. Natrium-Schwefel-Batterie nach einem der Ansprüche 1 bis 4, dadurch gekennzeichnet, dass der feste Elektrolyt (5) β-Aluminiumoxid ist.

6. Natrium-Schwefel-Batterie nach einem der Ansprüche 1 bis 5, dadurch gekennzeichnet, dass um die Plus-Elektrode (18) in der Kammer (3) für geschmolzenen Schwefel ein Hohlzylinder (51) vorgesehen ist, um die Umwälzung des geschmolzenen Schwefels durch Konvektion zu fördern.

7. Natrium-Schwefel-Batterie nach einem der Ansprüche 1 bis 6, dadurch gekennzeichnet, dass der geschmolzene Schwefel (6) in ein elektrisch leitendes Material imprägniert ist.

8. Natrium-Schwefel-Batterie nach Anspruch 7, dadurch gekennzeichnet, dass das elektrisch leitende Material ein Kohlenstoff-Filz ist.

9. Natrium-Schwefel-Batterie nach einem der Ansprüche 1 bis 8, dadurch gekennzeichnet, dass eine den oberen Teil der Kammer (3) für geschmolzenen Schwefel umgebende Kühlkammer (19) an dem oberen Ende der Kammer (10) für geschmolzenes Natrium vorgesehen ist und die Aussenfläche der Kammer (3) für geschmolzenen Schwefel mit Kühlrippen (11) versehen ist.

10. Natrium-Schwefel-Batterie nach einem der Ansprüche 1 bis 9, dadurch gekennzeichnet, dass Inertgas-Rohrleitungen zum Einleiten von Inertgas in die Kühlkammer (19), in den Raum über dem Flüssigkeitsspiegel in der Kammer (10) für flüssiges Natrium und in den Raum über dem Flüssigkeitsspiegel in dem Natrium-Vorratsbehälter (12) vorgesehen sind.

11. Natrium-Schwefel-Batterie nach Anspruch 10, dadurch gekennzeichnet, dass Ventile (17b, 17c) in den die Inertgas-Quelle (16) mit dem Raum oberhalb des Flüssigkeitsspiegels in der Kammer (10) für flüssiges Natrium und mit dem Natrium-Vorratsbehälter (12) verbindenden Rohrleitungen vorgesehen sind zur Zufuhr von geschmolzenem Natrium aus dem Natrium-Vorratsbehälter (12) zu der Kammer (10) für geschmolzenes Natrium durch Anlegen einer Druckdifferenz des Inertgases zwischen dem Raum oberhalb des geschmolzenen Natriums in der Kammer (10) und dem Raum oberhalb des Natriums in dem Vorratsbehälter (12).

12. Natrium-Schwefel-Batterie nach einem der Ansprüche 1 bis 11, dadurch gekennzeichnet, dass die Kammer (10) für geschmolzenes Natrium, der Natrium-Vorratsbehälter (12) und die Verbindungsleitungen mit Heizvorrichtungen (20, 21) umgeben sind.

13. Natrium-Schwefel-Batterie nach einem der Ansprüche 1 bis 12, dadurch gekennzeichnet, dass in dem Natrium-Umwälzmechanismus (13) ein Natrium-Reiniger (14) vorgesehen ist.

14. Natrium-Schwefel-Batterie nach Anspruch 13, dadurch gekennzeichnet, dass der Natrium-Reiniger (14) eine Kältefalle, Wärmefalle oder ein Adsorptionsfilter ist.

15. Vorrichtung zur Speicherung elektrischer Energie mit Natrium-Schwefel-Batterien nach Anspruch 1, wobei
—eine Mehrzahl von parallel zueinander geschalteten Moduln (400) bestehend aus einer Mehrzahl von Natrium-Schwefel-Batterien (37) mit einer gemeinsamen Kammer (10) für geschmolzenes Natrium vorgesehen ist,
—eine Mehrzahl der Moduln (400) zueinander in Reihe geschaltet ist zur Bildung von Akkumulatorketten (35),
—eine Mehrzahl der Akkumulatorketten (35) zueinander parallel geschaltet ist zur Bildung von Einheiten (34),
—die Ketten über einzelne Unterbrecher (33), eine gemeinsame Gleichstromreaktanz (32) und einen gemeinsamen Umformer (31) an eine Stromleitung (38) angeschlossen sind,
—die den einzelnen Moduln (400) gemeinsamen Kammern (10) für geschmolzenes Natrium in Reihen gleicher Spannungshöhe über einen Natriumumwälzmechanismus (13) mit einem gemeinsamen Natriumtank (12) verbunden sind und
—Entleerungsmechanismen, von denen jeder eine Rohrleitung (52) umfasst, die die gemeinsame Kammer (10) für geschmolzenes Natrium mit dem Natrium-Vorratstank (12) verbindet, ein Entleerungsventil (15) in der Rohrleitung (52) sowie Mittel (40) zur Feststellung einer aussergewöhnlichen elektrischen Entladung der Batterie und zur Steuerung des Entleerungsventils (15) vorgesehen sind (Fig. 1+4).

16. System zur Speicherung elektrischer Energie nach Anspruch 15, dadurch gekennzeichnet, dass die Kammer (3) für geschmolzenen Schwefel eine Kapsel aus festem Elektrolyt (5) darstellt, die herausnehmbar in die gemeinsame Kammer (10) für geschmolzenes Natrium eingesetzt ist.

17. System zur Speicherung elektrischer Energie nach Anspruch 15 oder 16, dadurch gekennzeichnet, dass der feste Elektrolyt (5) β-Aluminiumoxid ist.

18. System zur Speicherung elektrischer Energie nach einem der Ansprüche 15 bis 17, dadurch gekennzeichnet, dass zur Verbesserung der Umwälzung des geschmolzenen Schwefels durch Konvektion ein Hohlzylinder (51) um die positive Elektrode (18) in der Kammer (3) für geschmolzenen Schwefel angeordnet ist.

19. System zur Speicherung elektrischer Energie nach einem der Ansprüche 15 bis 18, dadurch gekennzeichnet, dass in dem Natrium-Umwälzmechanismus (13) ein Natrium-Reiniger (14) vorgesehen ist.

## Revendications

1. Batterie au sodium-soufre, comportant
une chambre à sodium fondu (10) contenant du sodium fondu (4) servant d'élément actif pour le pôle moins (1),
au moins une chambre à soufre fondu (3) contenant du soufre fondu (6) servant de matériau actif pour le pôle plus (2) et constituée par un électrolyte solide (5) perméable pour les ions sodium,
une cuve (12) de stockage du sodium, qui est en communication avec la chambre à sodium fondu (10), et
des moyens de vidange servant à retirer le sodium fondu de la chambre à sodium fondu (10) pour l'envoyer à la cuve (12) de stockage du sodium,
caractérisé en ce que les moyens de vidange comportent une canalisation (52) raccordant la chambre à sodium fondu (10) à la cuve (12) de stockage du sodium, une vanne de vidange (15) prévue dans la canalisation (52), et des moyens (40) pour détecter une décharge électrique anormale de la batterie et commander la vanne de vidange (15).

2. Batterie au sodium-soufre selon la revendication 1, caractérisée en ce que les moyens pour détecter une charge électrique anormale sont constitués par un détecteur de potentiel (40).

3. Batterie au sodium-soufre selon la revendication 1 ou 2, caractérisée en outre par un mécanisme (13) d'entraînement du sodium en circulation, pour purifier le sodium et le renvoyer de la cuve (12) de stockage du sodium à la chambre à sodium fondu (10).

4. Batterie au sodium-soufre selon l'une quelconque des revendications 1 à 3, caractérisée en ce que la chambre à soufre fondu (3) est une capsule constituée par l'électrolyte solide (5) et insérée, de façon détachable, dans la chambre à sodium fondu (10).

5. Batterie au sodium-soufre selon l'une des revendications 1 à 4, caractérisée en ce que l'électrolyte solide (5) et de l'alumine β.

6. Batterie au sodium-soufre selon l'une quelconque des revendications 1 à 5, caractérisée en ce qu'un cylindre creux (51) est disposé autour de l'électrode positive (18) à l'intérieur de la chambre à sodium fondu (3) de manière à faciliter la circulation du sodium fondu par convexion.

7. Batterie au sodium-soufre selon l'une des revendications 1 à 6, caractérisée en ce que le soufre fondu (6) imprègne un matériau électroconducteur.

8. Batterie au sodium-soufre selon la revendication 7, caractérisée en ce que le matériau électroconducteur est un feutre de carbone.

9. Batterie au sodium-soufre selon l'une des revendications 1 à 8, caractérisée en ce qu'une chambre de refroidissement (19) entourant la partie supérieure de la chambre à soufre fondu (3) est prévue à l'extrémité supérieure de la chambre à sodium fondu (10) et que la surface extérieure de la chambre à soufre fondu (3) est munie d'ailettes de refroidissement (11).

10. Batterie au sodium-soufre selon l'une des revendications 1 à 9, caractérisé en ce qu'il est prévu des canalisations véhiculant un gaz inerte, qui servent à introduire un gaz inerte dans la chambre de refroidissement (19), dans l'espace libre présent dans la chambre à sodium fondu (10) et dans l'espace libre présent dans la cuve (12) de stockage du sodium.

11. Batterie au sodium-soufre selon la revendication 10, caractérisée en ce que des vannes (17b, 17c) sont prévues dans les canalisations raccordant la source de gaz inerte (16) à l'espace libre de la chambre à sodium fondu (10) et à la cuve (12) de stockage du sodium, respectivement, pour l'envoi de sodium fondu depuis la cuve (12) de stockage du sodium à la chambre à sodium fondu (10), par l'application d'une différence de pression du gaz inerte entre l'espace libre de la chambre à sodium fondu (10) et l'espace libre de la cuve (12) de stockage du sodium.

12. Batterie au sodium-soufre selon l'une des revendications 1 à 11, caractérisée en ce que la chambre à sodium fondu (10), la cuve (12) de stockage du sodium et les canalisations de raccordement sont entourées par des moyens de chauffage (20, 21).

13. Batterie au sodium-soufre selon l'une des revendications 1 à 12, caractérisée en ce qu'un dispositif (14) de purification du sodium est prévu dans le mécanisme (13) de circulation du sodium.

14. Batterie au sodium-soufre selon la revendication 13, caractérisée en ce que le dispositif (14) de purification du sodium est un piège froid, un piège chaud ou un filtre du type à adsorption.

15. Dispositif de stockage d'une énergie électrique utilisant des batteries au sodium-soufre selon la revendication 1, dans lequel

—il est prévu une pluralité de modules (400) branchés en parallèle les uns avec les autres et constituées par une pluralité de batteries au sodium-soufre (37) comportant une chambre commune à sodium fondu (10),

—une pluralité de modules (400) sont raccordés en série les uns avec les autres de manière à former des suites (35) de batteries de stockage,

—une pluralité de suites de batteries (35) sont raccordées en parallèle les unes avec les autres de manière à former des unités (34),

—les suites sont raccordées à une ligne d'alimentation en énergie (38) par l'intermédiaire d'interrupteurs individuels (35), d'une bobine commune de réactance à courant continu (32) et d'un convertisseur commun (31),

—les chambres communes à sodium fondu (10) des modules individuels (400) de rangées situées à un même niveau de potentiel sont raccordées à une cuve à sodium commune (12) par l'intermédiaire d'un mécanisme (13) de circulation du sodium, et

—il est prévu (figures 1+4) des mécanismes de vidange, dont chacun comporte une canalisation (52) raccordant la chambre commune à sodium fondu (10) à la cuve (12) de stockage du sodium, une vanne de vidange (15) montée dans la canalisation (52), et des moyens (40) pour détecter une décharge électrique anormale de la batterie et commander la vanne de vidange (15).

16. Système de stockage d'énergie électrique selon la revendication 15, caractérisé en ce que la chambre à soufre fondu (3) est constituée par une capsule de l'électrolyte solide (5) et est insérée, de façon détachable, dans la chambre commune à sodium fondu (10).

17. Système de stockage d'alimentation en énergie selon la revendication 15 ou 16, caractérisé en ce que l'électrolyte solide (5) est de l'alumine β.

18. Système de stockage de l'énergie électrique selon l'une des revendications 15 à 17, caractérisé en ce qu'un cylindre creux (51) est prévu autour de l'électrode positive (18) dans la chambre à soufre fondu (3) de manière à faciliter la circulation du soufre fondu par convexion.

19. Système d'alimentation en énergie électrique selon l'une des revendications 15 à 18, caractérisé en ce qu'un dispositif (14) de purification du sodium est prévu dans le mécanisme (13) de circulation du sodium.

FIG. I

## FIG. 2

FIG. 3

## FIG. 4